# EUROPEAN PATENT APPLICATION

(11) **EP 2 857 595 A1**
(43) Date of publication of application: **08.04.2015**
(21) Application number: 13797580.1
(22) Date of filing: 10.04.2013
(51) Int. Cl.: E02F 9/08, B60K 13/02, B60K 13/04, B60K 15/063, B60R 3/00, E02F 9/00

(54) **CONSTRUCTION MACHINERY**

(30) Priority: 01.06.2012 JP 2012126261
(71) Applicant: Caterpillar SARL, 1208 Geneva (CH)
(72) Inventor: NISHIKAWA, Akitoshi, Tokyo 158-8530 (JP); YOSHI, Takahiko, Tokyo 158-8530 (JP); MANNA, Niladri, Tokyo 158-8530 (JP); YAMASHITA, Yasuo, Kanagawa 252-5292 (JP)
(74) Representative: Wagner, Karl H.
(86) International application number: PCT/JP2013/060815
(87) International publication number: WO 2013/179780

(57) **Abstract**

A construction machine including an upper revolving body capable of improving maintenance work efficiency is provided, in which when a worker carries out a plurality of maintenance operations, the worker can safely carry out the plurality of maintenance operations with a stable posture at the same location on a maintenance deck without moving to another location when the worker starts another operation after finishing one operation. The upper revolving body 6 includes a maintenance deck 30 that is provided on the upper center thereof, and a elevating step 32 that is provided to ascend and descend from a side portion of the upper revolving body 6 toward the maintenance deck 30, and equipment requiring maintenance is provided around the maintenance deck 30 on the upper revolving body 6, and a maintenance portion of the equipment is provided in the vicinity of the maintenance deck 30.

## Description

### Technical Field

The present invention relates to a construction machine including an upper revolving body such as a hydraulic excavator.

### Background Art

In general, a hydraulic excavator, which is a representative example of a construction machine, approximately includes a lower traveling body that is self-propelled, an upper revolving body that is turnably provided on the lower traveling body, and a working arm device that is attached to a front side of the upper revolving body to be moved up and down.

The upper revolving body includes a turning frame configuring a framed structure, an operator cab that is provided on a front left side of the turning frame along a left side of the working arm device, a fuel tank and an operating oil tank that are arranged forward and back at a position on the turning frame which is a side opposite to the operator cab in a state where the working arm device is interposed therebetween, and a machine space that is provided behind the turning frame and accommodates machinery such as an engine (for example, refer to Patent Citation 1).

In addition, the upper revolving body includes an air cleaner of the engine. The air cleaner itself is heated in the vicinity of the engine reaching a high temperature, and thus, there is a concern that an intake temperature of the engine may increase and efficiency of the engine may decrease. Accordingly, the air cleaner is separated from the machine space by a partition wall member, and in consideration of ease of assembly with respect to intake piping from the air cleaner to an intake opening portion of the engine, the air cleaner may be provided behind the operator cab (for example, refer to Patent Citation 2).

However, when a worker carries out a maintenance operation on the machinery provided on the upper revolving body, the worker rides on a maintenance deck provided on an upper portion of the upper revolving body and may carry out the maintenance operation. An elevating step is provided on the front right side of the upper revolving body so that the worker may ascend to and descend from the maintenance deck. In order to assist the ascending and the descending of the worker using the elevating step, or in order to prevent the worker from inadvertently falling to the side portion of the upper revolving body when the worker ascends or descends using the elevating step or the like, a large handrail is provided on the side portion of the elevating step.

[Patent Citation 1] Japanese Unexamined Patent Application Publication No. 2006-69365
[Patent Citation 2] Japanese Unexamined Patent Application Publication No. 2004-257333

### Disclosure of Invention

### Technical Problem

In the construction machine having the upper revolving body in the related art as described above, there are problems to be solved as below.

In the configuration disclosed in Patent Citation 1, the maintenance deck is arranged on a wide area on the upper portion of the upper revolving body, and when the worker carries out a plurality of maintenance operations such as checking of engine oil, supply of the fuel, or replacement of a filter of the operating oil tank, the worker must move to another location to start another operation after finishing one operation, and thus, there is a problem that it takes much time and labor for the maintenance operations.

The elevating step is provided on the front right side of the upper revolving body, and is positioned at a side opposite to the operator cab in the state where the working arm device is interposed therebetween. Accordingly, when the worker positioned in the operator cab moves to the maintenance deck to carry out the maintenance operations, the worker must pass through the lower portion of the working arm device or must make a large detour to avoid the working arm device, and there is a problem that it takes much time and labor for the maintenance operations.

In order to prevent the worker from inadvertently falling to the side portion of the upper revolving body when the worker ascends and descends using the elevating step or the like, or in order to allow the worker to grasp the handrail easily even in a posture in which the worker stands on the upper surface of the upper revolving body, the handrail protrude greatly toward the upper portion thus being positioned at a higher position than the height of the waist of the worker. Accordingly, when an operation such as excavation or the like is carried out, the handrail vibrates greatly due to vibration or the like of the machine body. As a result, since stress is concentrated in the fixing portion between the handrail and the upper revolving body or the like, it is necessary to reinforce the fixing portion so that the fixing portion is not damaged.

In addition, in the configuration disclosed in Patent Citation 2, the air cleaner is provided behind the operator cab, and the insertion portion of the element of the cleaner is provided to face the side portion of the upper revolving body. Accordingly, since the worker carries out the maintenance operations such as checking, cleaning, or replacement of the element of the air cleaner on a crawler of the lower traveling body, there is danger that the worker may inadvertently fall from the crawler of the lower traveling body during the maintenance operation of the air cleaner, and there is a problem that the maintenance of the air cleaner cannot be safely carried out. Moreover, when the worker starts other operations such as checking of the engine oil after finishing the maintenance operation of the air cleaner, the worker must pass through the lower portion of the working arm device or must make a large detour to avoid the working arm device in order to move to the maintenance deck, and thus, there is a problem that it takes much time and labor for the maintenance operations.

The present invention is made in consideration of the above-described circumstances, and an object of the present invention is to provide a construction machine in which when a worker carries out a plurality of maintenance operations, the worker can carry out the plurality of maintenance operations at the same location on the maintenance deck with a stable posture without moving to another location when the worker starts another operation after finishing one operation, and without operating on the crawler of the lower traveling body in an unstable posture, and maintenance work efficiency can be improved.

Another aspect of the present invention is to provide a construction machine in which when the worker positioned in an operator cab moves to the maintenance deck to carry out the maintenance operations, the worker can easily move from the operator cab to the maintenance deck without passing through the lower portion of the working arm device or making a large detour to avoid the working arm device, and even when a large handrail is not provided, the worker can safely ascend to and descend from the maintenance deck, and the maintenance work efficiency can be improved.

### Technical Solution

In order to solve the above-described objects, according to claim 1 of the present invention, there is provided a construction machine including a lower traveling body and an upper revolving body that is turnably provided on the lower traveling body, including: a maintenance deck that is provided at an upper center of the upper revolving body; and a elevating step that is provided to ascend and descend from a side portion of the upper revolving body toward the maintenance deck, in which equipment requiring maintenance is provided around the maintenance deck on the upper revolving body, and a maintenance portion of the equipment is provided in the vicinity of the maintenance deck.

According to claim 2 of the present invention, the equipment may include: an engine that is provided on a lower rear side of the maintenance deck; and an air cleaner of the engine that is separated from the engine by a partition wall member preventing transfer of heat from the engine, is provided above the engine, and is provided behind the maintenance deck, and the air cleaner may be provided so that an insertion portion of an element of the air cleaner faces the maintenance deck.

According to claim 3 of the present invention, the equipment may include: an operating oil tank that is provided on one of a left direction and a right direction of the upper revolving body; a fuel tank that is provided on the other of the left direction and the right direction of the upper revolving body; and a urea water tank that is provided behind the fuel tank and stores urea water which is a reducing agent for an exhaust gas processing device of the engine, and a filter of the operating oil tank, an oil supply port of the fuel tank, and a water supply port of the urea water tank may be provided in the vicinity of the maintenance deck.

According to claim 4 of the present invention, the upper revolving body may include an operator cab that is positioned at one of the left direction and the right direction of the upper revolving body and is provided on the front of the upper revolving body, and the elevating step may be provided along a rear surface of the operator cab.

### Advantageous Effects

According to the invention of claim 1, the equipment requiring maintenance is provided around the maintenance deck, and the maintenance portion of the equipment is provided in the vicinity of the maintenance deck. Accordingly, when a worker carries out a plurality of maintenance operations, the worker can safely carry out the plurality of maintenance operations with a stable posture at the same location on a maintenance deck without moving to another location when the worker starts another operation after finishing one operation. As a result, it is possible to shorten the time needed for the maintenance operations, and it is possible to improve maintenance work efficiency.

According to the invention of claim 2, the air cleaner is provided so that an insertion portion of the element of the air cleaner faces the maintenance deck. Accordingly, when the worker carries out the maintenance operation of the air cleaner, the worker can safely carry out the operation on the maintenance deck with a stable posture without carrying out the operation on a crawler of the lower traveling body or the like with an unstable posture. As a result, it is possible to improve the maintenance work efficiency and safety of the operation.

In addition, since the air cleaner is provided at a position of the upper portion of the engine, in the case where the worker carries out the plurality of maintenance operations, when the worker starts another operation such as checking of engine oil after finishing the maintenance operation of the air cleaner, the worker can start another operation such as checking of engine oil at the same location on the maintenance deck without moving to another location. As a result, it is possible to shorten the time needed for the maintenance operations, and it is possible to improve the maintenance work efficiency.

According to the invention of claim 3, the filter of the operating oil tank, the oil supply port of the fuel tank, and the water supply port of the urea water tank are provided in the vicinity of the maintenance deck. Accordingly, in the case where the worker carries out the plurality of maintenance operations, when the worker starts the supply operation of the fuel or the supply operation of the urea water after finishing the replacement operation of the filter of the operating oil tank, the worker can carry out the plurality of maintenance operations at the same location on the maintenance deck without moving to another location. As a result, it is possible to shorten the time needed for the maintenance operations, and it is possible to improve the maintenance work efficiency.

According to the invention of claim 4, the elevating step is provided to ascend and descend from the side portion of the upper revolving body toward the maintenance deck along the rear surface of the operator cab. Accordingly, when the worker positioned in the operator cab moves to the maintenance deck to carry out the maintenance operation, without passing through the lower portion of the working arm device or making a large detour to avoid the working arm device, the worker can easily move from the operator cab to the maintenance deck using the elevating step provided along the rear surface of the operator cab. As a result, it is possible to shorten the time needed for the maintenance operations, and it is possible to improve the maintenance work efficiency.

Moreover, since the elevating step is provided along the rear surface of the operator cab, even when a large handrail which protrudes greatly toward the upper portion to be positioned at a higher position than the height of the waist of the worker is not provided on the side portion of the elevating step, the worker can safely ascend to and descend from the maintenance deck along the rear surface of the operator cab. As a result, it is possible to solve a problem in which the fixing portion or the like of the handrail may become damaged. In addition, since it is not necessary to provide a large handrail, it is possible to decrease the number of members or the cost of a material.

### Brief Description of Drawings

Fig. 1 is a left-side view of a hydraulic excavator that is a representative example of a construction machine configured according to the present invention.
Fig. 2 is a right-side view showing a portion of the hydraulic excavator.
Fig. 3 is a left-side view showing a portion of the hydraulic excavator in a state where a left-side portion cover is open.
Fig. 4 is a perspective view showing a elevating step or the like in an enlarged manner, (a) shows a state where an uppermost step portion is closed, and (b) shows a state where the uppermost step portion is open.
Fig. 5 is a top view showing a portion of the hydraulic excavator.
Fig. 6 is a cross-sectional view when viewed in an arrow B-B direction of Fig. 5.

### Best Mode for Carrying Out the Invention

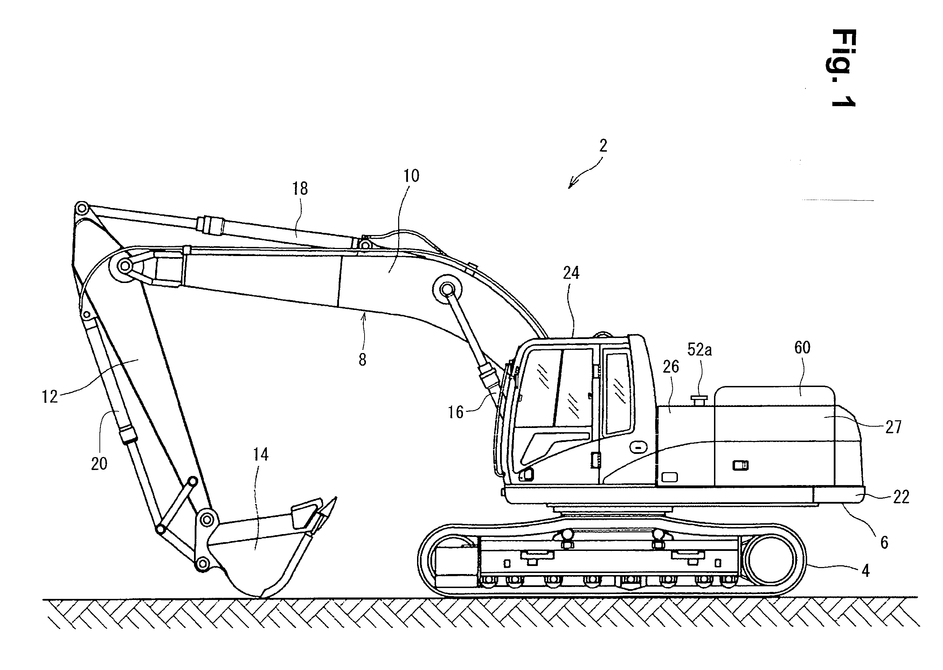

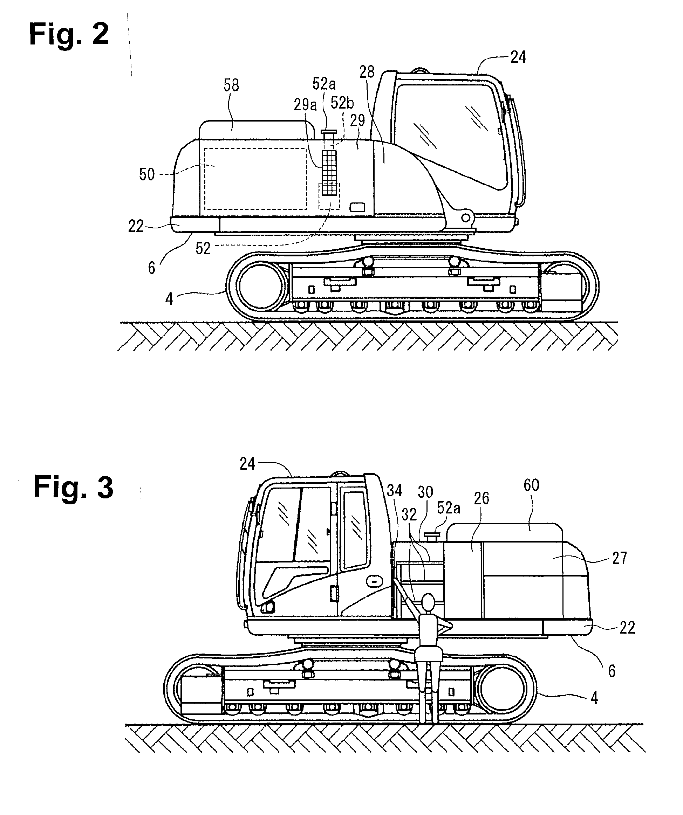

The present invention is described with reference to Figs. 1 and 2. A hydraulic excavator entirely indicated by a reference numeral 2 approximately includes a lower traveling body 4 that is a traveling device, an upper revolving body 6 that is turnably provided about a vertical axial line on the lower traveling body 4, and a working arm device 8 that is attached to a front side of the upper revolving body 6 to be moved up and down.

The working arm device 8 includes a boom 10 that is attached to the front side of the upper revolving body 6 to be moved up and down, an arm 12 that is swingably attached to the tip of the boom 10, a work tool 14 that is swingably attached to the tip of the arm 12, a boom operating cylinder 16 for operating the boom 10 between the upper revolving body 6 and the boom 10, an arm operating cylinder 18 for operating the arm 12 between the boom 10 and the arm 12, and a work tool operating cylinder 20 for operating the work tool 14 between the arm 12 and the work tool 14. At the time of an excavation operation of earth and sand, or the like, the upper revolving body 6 is turned with respect to the lower traveling body 4, and the excavation operation of earth and sand, or the like is carried by the working arm device 8 that is attached to the front side of the upper revolving body 6 to be moved up and down.

The upper revolving body 6 includes a turning frame 22 that configures a framed structure, an operator cab 24 that is provided on the front left side of the turning frame 22 along the left side of the working arm device 8, left-side portion covers 26 and 27 that cover the left side portion of the upper revolving body 6, and right-side portion covers 28 and 29 that cover the right-side portion of the upper revolving body 6. An opening 29a is provided on the front portion side of the right-side portion cover 29, and cooling air is taken into the inner portion of a machine body from the opening 29a by a cooling fan 48 described below.

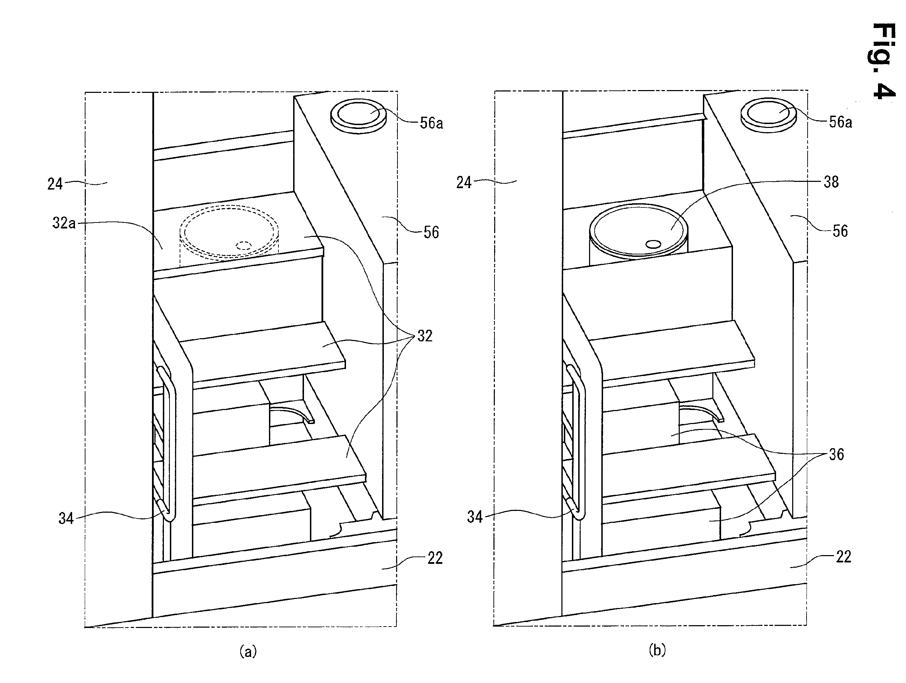

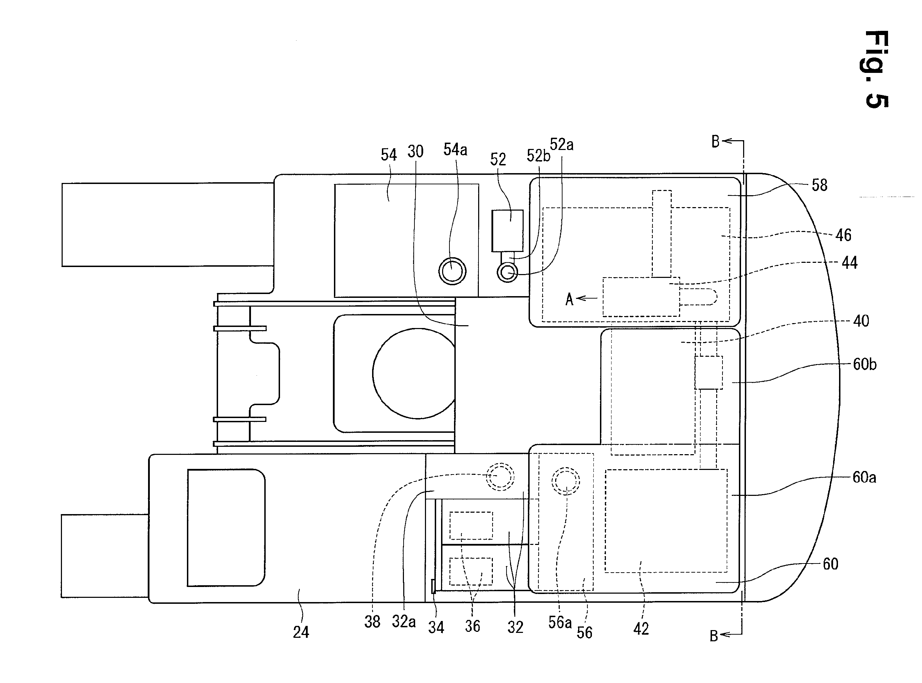

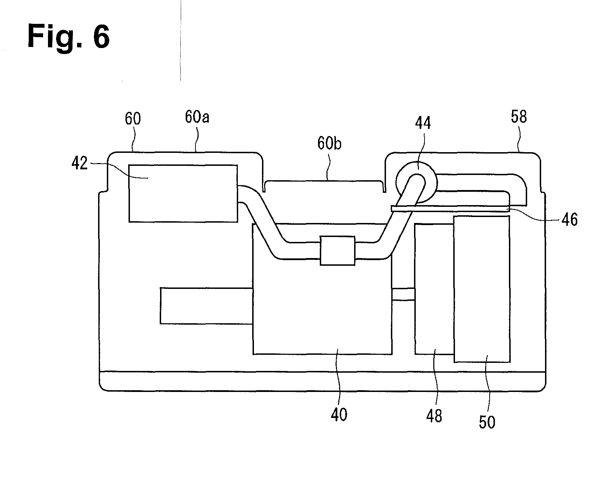

Next, the present invention is described with reference to Figs. 3 to 6. The upper revolving body 6 includes a maintenance deck 30 that is provided on the upper center thereof and becomes a scaffold when a worker carries out the maintenance operation. An elevating step 32 is provided along the rear surface of the operator cab 24 inside the left-side portion cover 26 so that the worker can ascend and descend from the side portion of the upper revolving body 6 to the maintenance deck 30. A small handrail 34 for assisting the ascending and the descending of the worker is provided on the side portion of the elevating step 32. Batteries 36 and 36 for a power source are mounted into a space below the elevating step 32. An uppermost step portion 32a of the elevating step 32 is swingably supported vertically, and a pail can 38, tools, or the like can be accommodated in the inner portion of the uppermost step portion.

In the lower rear side of the maintenance deck 30, an engine 40 is provided so that a portion for checking tension of a belt of the engine 40, a portion for checking a level gauge of engine oil, or the like is positioned in the vicinity of the maintenance deck 30.

In the upper left side of the engine 40, an exhaust gas processing device 42 of the engine 40 is provided. The exhaust gas processing device 42 includes a post-processing device such as a particulate matter removal filter that collects and removes particulate matter contained in exhaust gas, a NOx emission control device that purifies nitrogen oxide (NOx) using urea water, or an oxidation catalyst that oxidizes and removes carbon monoxide or hydrocarbons.

In the upper right side of the engine 40, an air cleaner 44 of the engine 40 is provided so that the longitudinal direction thereof faces in a front-rear direction. An element of the air cleaner 44 is extracted from an arrow A direction, and is inserted in a direction opposite to the arrow A direction. A partition wall member 46 is provided between the engine 40 and the air cleaner 44, and thus, transfer of heat from the engine 40 to the air cleaner 44 is prevented by the partition wall member.

In the right side of the engine 40, a cooling fan 48 connected to the tip of one side of an output shaft of the engine 40 is provided, and a cooling package 50 is provided further to the right of the cooling fan 48 in the machine body. The cooling package 50 is a package in which a plurality of heat exchangers such as a radiator, an oil cooler, or an inter cooler are integrally formed. Moreover, the cooling fan 48 is an axial fan that suctions air outside the machine body from the opening 29a of the right-side portion cover 29 as cooling air, and circulates the air to the cooling package 50 and the engine 40.

In the front of the cooling package 50 and in the lower right side of the maintenance deck 30, a urea water tank 52 storing urea water which is a reducing agent for the exhaust gas processing device 42 of the exhaust 40 is provided, and a nozzle 52b is provided so that a water supply port 52a of the urea water tank is positioned in the vicinity of the maintenance deck 30.

In front of the urea water tank 52 and on the lower right side of the maintenance deck 30, a fuel tank 54 is provided, and an oil supply port 54a of the fuel tank is provided to be positioned in the vicinity of the maintenance deck 30.

On the lower left side of the maintenance deck 30, an operating oil tank 56 is provided, and a filter 56a filtering the operating oil is provided to be positioned in the vicinity of the maintenance deck 30 in the inner portion of the oil tank.

One hood 58 is swingably provided to be opened and closed to cover the upper surface of the air cleaner 44, the cooling fan 48, the cooling package 50, or the like, and another hood 60 is swingably provided to be opened and closed to cover the upper surface of the engine 40, the exhaust gas processing device 42, the operating oil tank 56, or the like.

Two members such as a left-side portion 60a that is positioned above the exhaust gas processing device 42, the operating oil tank 56, or the like and has approximately the same shape as the one hood 58, and a right-side portion 60b that is positioned above the engine 40 and has smaller dimensions in the height direction and the front-rear direction of the machine body than the left-side portion 60a are connected to each other, and thus, the other hood 60 is configured.

As described above, the operation of the construction machine having the upper revolving body is described.

According to the construction machine having the upper revolving body 6 configured according to the present invention, in the construction machine including the lower traveling body 4 and the upper revolving body 6 that is turnably provided on the lower traveling body 4, the construction machine includes the maintenance deck 30 that is provided at the upper center of the upper revolving body 6, and a elevating step 32 that is provided to ascend and descend from the side portion of the upper revolving body 6 toward the maintenance deck 30, equipment requiring maintenance is provided around the maintenance deck 30 on the upper revolving body 6, and the maintenance portion of the equipment is provided in the vicinity of the maintenance deck 30.

In addition, the equipment includes the engine 40 that is provided on the lower rear side of the maintenance deck 30, and the air cleaner 44 of the engine 40 that is separated from the engine 40 by the partition wall member 46 preventing the transfer of the heat from the engine 40, is provided above the engine 40, and is provided behind the maintenance deck 30, and the air cleaner 44 is provided so that the insertion portion of the element of the air cleaner faces the maintenance deck 30.

Moreover, the equipment includes the operating oil tank 56 that is provided on the left side of the upper revolving body 6, the fuel tank 54 that is provided on the right side of the upper revolving body 6, and the urea water tank 52 that is provided behind the fuel tank 54 and stores the urea water which is the reducing agent for the exhaust gas processing device 42 of the engine 40, and the filter 56a of the operating oil tank 56, the oil supply port 54a of the fuel tank 54, and the water supply port 52a of the urea water tank 52 are provided in the vicinity of the maintenance deck 30.

Accordingly, when the worker carries out a plurality of maintenance operations, without moving to another location when the worker starts another operation after finishing one operation, the worker can safely carry out the plurality of maintenance operations such as checking of a level gauge of the engine oil, checking of tension of the belt of the engine 40, cleaning of the exhaust gas processing device 42, checking of the element of the air cleaner 44, cleaning, replacement, and supply of the urea water, supply of the fuel, replacement of the filter 56a of the operating oil tank 56, or the like, at the same location on the maintenance deck 30 in a stable posture. As a result, it is possible to shorten the time needed for the maintenance operations, and it is possible to improve maintenance work efficiency.

The upper revolving body 6 includes the operator cab 24 provided on the front left side, and the elevating step 32 is provided along the rear surface of the operator cab 24.

Accordingly, when the worker positioned in the operator cab 24 moves to the maintenance deck 30 to carry out the maintenance operations, without passing through the lower portion of the working arm device 8 or making a large detour to avoid the working arm device 8, the worker can easily move from the operator cab 24 to the maintenance deck 30 using the elevating step 32 provided along the rear surface of the operator cab 24. As a result, it is possible to shorten the time needed for the maintenance operations, and it is possible to improve the maintenance work efficiency.

Moreover, since the elevating step 32 is provided along the rear surface of the operator cab 24, even when a large handrail which protrudes greatly toward the upper portion to be positioned at a higher position than the height of the waist of the worker is not provided on the side portion of the elevating step 32, the worker can safely ascend to and descend from the maintenance deck 30 along the rear surface of the operator cab 24. As a result, it is possible to solve a problem in which the fixing portion or the like of the handrail may become damaged. In addition, since it is not necessary to provide a large handrail, it is possible to decrease the number of members or the cost.

The opening 29a for taking cooling air into the inner portion of the machine body is provided on the front portion side of the right-side portion cover 29 positioned on the side portions of the cooling package 50 and the urea water tank 52. As a result, compared with when the opening is provided at the position opposite to the cooling fan 48 in a state where the cooling package 50 is interposed therebetween in the right-left direction of the upper revolving body 6, noise of the cooling fan 48 does not easily leak to the outside of the machine body, and it is possible to achieve a decrease in noise. In addition, since the cooling air passes through the vicinity of the urea water tank 52, it is possible to cool the urea water tank 52 which is not resistance of high temperature.

Since the left-side portions 60a of the one hood 58 and the other hood 60 have approximately the same shape, it is possible to manufacture the left-side portions 60a of the one hood 58 and the other hood 60 by the same mold, and thus, it is possible to decrease the manufacturing cost. In addition, since the hood covering the upper surface of the machinery behind the upper revolving body 6 is a double hood configuration having the one hood 58 and the other hood 60, it is possible to decrease an operating force needed for opening and closing the hood, and it is possible to improve the maintenance work efficiency.

### Explanation of Reference Symbols

4: lower traveling body
6: upper revolving body
24: operator cab
30: maintenance deck
32: elevating step
40: engine
42: exhaust gas processing device
44: air cleaner
46: partition wall member
52: urea water tank
52a: water supply port
54: fuel tank
54a: oil supply port
56: operating oil tank
56a: filter

## Claims

1. A construction machine including a lower traveling body and an upper revolving body that is turnably provided on the lower traveling body, comprising:
a maintenance deck that is provided at an upper center of the upper revolving body; and
an elevating step that is provided to ascend and descend from a side portion of the upper revolving body toward the maintenance deck,
wherein equipment requiring maintenance is provided around the maintenance deck on the upper revolving body, and a maintenance portion of the equipment is provided in the vicinity of the maintenance deck.

2. The construction machine according to claim 1,
wherein the equipment includes:
an engine that is provided on a lower rear side of the maintenance deck; and
an air cleaner of the engine that is separated from the engine by a partition wall member preventing transfer of heat from the engine, is provided above the engine, and is provided behind the maintenance deck,
wherein the air cleaner is provided so that an insertion portion of an element of the air cleaner faces the maintenance deck.

3. The construction machine according to claim 1 or 2,
wherein the equipment includes:
an operating oil tank that is provided on one of a left direction and a right direction of the upper revolving body;
a fuel tank that is provided on the other of the left direction and the right direction of the upper revolving body; and
an urea water tank that is provided behind the fuel tank and stores urea water which is a reducing agent for an exhaust gas processing device of the engine,
wherein a filter of the operating oil tank, an oil supply port of the fuel tank, and a water supply port of the urea water tank are provided in the vicinity of the maintenance deck.

4. The construction machine according to any one of claims 1 to 3,
wherein the upper revolving body includes an operator cab that is positioned at one of the left direction and the right direction of the upper revolving body and is provided on the front of the upper revolving body, and
wherein the elevating step is provided along a rear surface of the operator cab.
